# EUROPÄISCHE PATENTSCHRIFT

(11) **EP 3 538 314 B1**
(45) Veröffentlichungstag und Bekanntmachung des Hinweises auf die Patenterteilung: **20.10.2021**
(21) Anmeldenummer: 17808782.1
(22) Anmeldetag: 08.11.2017
(51) Int. Cl.: B23K 26/00, B82B 3/00, B23K 26/073, B23K 26/08, B82Y 30/00, B82Y 40/00, B23K 26/354, B23K 26/0622, C01B 32/158, B23K 101/16, B23K 101/34, B23K 103/08, B23K 103/10, B23K 103/16, B23K 103/18

(54) **VERFAHREN ZUM ERZEUGEN EINER STRUKTURIERTEN KEIMSCHICHT UNTER VERWENDUNG EINES LASERSTRAHLES ; ENTSPRECHENDE VORRICHTUNG**
METHOD FOR PRODUCING A STRUCTURE SEED LAYER USING A LASER BEAM; CORRESPONDING APPARATUS
PROCÉDÉ DE PRODUCTION D'UNE COUCHE DE GERMINATION STRUCTURÉE AU MOYEN D'UN FAISCEAU LASER, DISPOSITIF CORRESPONDANT

(30) Priorität: 09.11.2016 DE 102016121462
(43) Veröffentlichungstag der Anmeldung: 18.09.2019
(73) Patentinhaber: Aixtron SE, 52134 Herzogenrath (DE)
(72) Erfinder: SCHINELLER, Bernd, 52074 Aachen (DE)
(74) Vertreter: Grundmann, Dirk
(86) Internationale Anmeldenummer: PCT/EP2017/078545
(87) Internationale Veröffentlichungsnummer: WO 2018/087118

(56) Entgegenhaltungen:
- WO-A1-2014/192955
- WO-A1-2015/036426
- JP-A- 2014 084 245
- US-A1- 2009 121 219

## Beschreibung

### Gebiet der Technik

Die Erfindung betrifft ein Verfahren zum Erzeugen einer strukturierten Keimschicht zum darauf Abscheiden von Kohlenstoff-Nanoröhrchen, wobei eine zuvor auf ein Substrat aufgebrachte Metallschicht mit einem Laserstrahl derart energiebeaufschlagt wird, dass sich die Metallschicht zu vereinzelten Inseln umformt.

Die Erfindung betrifft darüber hinaus eine Vorrichtung zur Durchführung des Verfahrens.

### Stand der Technik

Die US 2009/0121219 A1 (Basis des Oberbegriffes der Ansprüche 1 und 13) beschreibt ein Verfahren, bei dem ein Substrat mit einer aus mehreren Einzelschichten bestehenden Metallschicht beschichtet wird und diese Metallschicht mittels eines Laserstrahls derart beaufschlagt wird, dass die Metallschicht körnig wird. Auf die körnige Metallschicht werden dann CNTs abgeschieden.

Die EP 0997261 9 beschreibt die Verwendung einer zu einer Linie aufgeweiteten Laserstrahls zum Laserschweißen. Dabei wird eine Maske verwendet, die auf das Werkstück aufgelegt wird.

Die EP 2591875 A1 beschreibt einen Laser mit einer Strahltransformationslinse, die den Laserstrahl linienartig aufweitet. Mittels einer Lasermaske wird dieser Laser zum Maskenschweißen von Kunststoffteilen verwendet.

Das Paper "The fabrication of periodic metal nanodot arrays through pulsed laser melting induced fragmentation of metal nanogratings", Nanotechnology 20 (2009) 285310 vom 23. Juni 2009 beschreibt ein Verfahren zur Bildung einer regelmäßigen Tröpfchenanordnung auf einer Oberfläche. Auf die Oberfläche wird zunächst ein "nanograting" in Form von parallel verlaufende linienförmige Gräben aufgebracht. Quer zu den Gräben werden Metalllinien aufgebracht. Durch Beschuss mit einem einzelnen Laserpuls bilden sich an den Kreuzungspunkten der Metalllinien und der Gräben gleich große Metalltröpfchen. Wird hingegen eine geschlossene Schicht mit einem Laserpuls beaufschlagt, bilden sich ungleichmäßig verteilte Tröpfchen unregelmäßiger Größe.

Aus dem Paper "Das Wachstum von Nanodrähten", Physik Journal 4 (2005) Nr. 5, Seite 29, ist das Herstellen von Halbleiter-Nanodrähten bekannt, bei dem mittels SiO₂-Kugeln Metallinseln auf einer Oberfläche abgeschieden werden, auf denen sich Nanotröpfchen bilden.

Die WO 2015/036426 A1 beschreibt eine laser-induzierte Metalldiffusion in Glas, um das Glas einzufärben. Auf die Glasoberfläche wird eine metallhaltige Paste aufgetragen. Anschließend erfolgt eine Belichtung mit einem aufgeweiteten Laserstrahl, der über die Oberfläche wandert.

### Zusammenfassung der Erfindung

Der Erfindung liegt die Aufgabe zugrunde, Maßnahmen anzugeben, mit denen sich die Bildung von Keimzonen für eine CNT-Beschichtung

reproduzierbar steuern lässt, wobei insbesondere gefordert wird, dass sich die Größe der Keimzonen und deren Abstände reproduzierbar einstellen lassen.

Gelöst wird die Aufgabe durch die in den unabhängigen Verfahrenanspruch 1 und Vorrichtungsanspruch 13 angegebene Erfindung.

Die Unteransprüche 2-12 definieren vorteilhafte Weiterbildungen der Erfindung.

Zunächst und im Wesentlichen wird vorgeschlagen, dass eine linienförmige Belichtungszone erzeugt wird, wobei während der kontinuierlichen oder gepulsten Belichtung der linienförmigen Belichtungszone die gesamte Fläche der Belichtungszone gleichzeitig, und nicht wie bei einem schreibenden, sich zeilenweise bewegenden punktförmigen Laserstrahl, mit Lichtleistung beaufschlagt wird, so dass lediglich eine lokale Erwärmung erzeugt wird. Erfindungsgemäß wandert die linienförmige Belichtungszone mit einer einstellbaren Geschwindigkeit über die Metallschicht, die zuvor auf das Substrat abgeschieden worden ist. Dies kann durch eine Bewegung des Laserstrahls, bevorzugt aber durch eine Bewegung des Substrates erfolgen, wobei besonders bevorzugt das Substrat von einer Bevorratungsrolle abgewickelt und auf einer zweiten Bevorratungsrolle wieder aufgewickelt wird. Über das Substrat wandert somit ein schmaler Bereich, der über seine gesamte, der Breite des Substrates entsprechenden Weite die Metallschicht zur selben Zeit auf im Wesentlichen dieselbe Temperatur aufheizt, so dass ein Temperaturgradient im Wesentlichen nur in Schreibrichtung, nicht jedoch quer zur Schreibrichtung ausgebildet wird. Über die Parameter Laserleistung, ggf. Pulsenergie oder Pulsdauer sowie Transportgeschwindigkeit des Substrates lassen sich die Durchmesser der inselförmigen Keimzonen und deren Abstände einstellen. Als weiterer Parameter zur Voreinstellung der Größe und der Verteilung der inselförmigen Keimzonen auf der Substratoberfläche dienen die Materialstärke der Metallschicht und die in Transportrichtung gemessene Länge des aufgeweiteten Laserstrahls, die der Breite der Belichtungszone entspricht. Die Länge der linienförmigen Belichtungszone erstreckt sich bevorzugt über das gesamte Substrat, so dass die Weite des aufgeweiteten Laserstrahls etwa 20 bis 1.000 mm beträgt. Der einen linienförmigen Querschnitt aufweisende Laserstrahl kann eine Länge von 0,5 bis 5 mm betragen. Diese Länge entspricht der Breite der Belichtungszone. Die Wellenlänge des Laserlichtes kann 200 nm bis 1.500 nm betragen. Bei einem gepulsten Laser kann die Pulsenergie zwischen 0,5 und 20 mJ liegen. Die Geschwindigkeit, mit der sich die Belichtungszone relativ gegenüber dem beschichteten Substrat bewegt, kann zwischen 1 und 50 cm/ s, bevorzugt zwischen 5 und 30 cm/ s betragen. Durch Wahl der Laserleistung, der Länge des Laserstrahls, was der Breite der Belichtungszone entspricht, und durch die Transportgeschwindigkeit des Substrates können die kreisäquivalenten Durchmesser der inselförmigen Keimzellen eingestellt werden. Diese liegen bevorzugt zwischen 1 nm und 2 µm, bevorzugt zwischen 1 nm und 200 nm und besonders bevorzugt zwischen 1 nm und 100 nm. Auch der mittlere Abstand der inselförmigen Keimzonen kann durch diese Parameter voreingestellt werden. Er liegt bevorzugt im Bereich zwischen 1 nm und 2 µm, bevorzugt in einem Bereich zwischen 1 nm und 500 nm, besonders bevorzugt zwischen 1 nm und 100 nm. Bei dem Abstand kann es sich entweder um den Abstand der Mittelpunkte benachbarter inselförmiger Keimzonen handeln. Es kann sich aber auch um den Abstand zweier Ränder benachbarter inselförmiger Keimzonen handeln. Der Abstand ist dann die laterale Länge eines Zwischenraums zwischen benachbarten inselförmigen Keimzonen. Die Bildung der inselförmigen Keimzonen ist ein selbst organisierendes System, wobei sich die inselförmigen Keimzonen typischerweise auf den Eckpunkten von rechteckigen und insbesondere quadratischen oder nahezu quadratischen Einheitszellen anordnen.

Die Erfindung betrifft darüber hinaus eine Vorrichtung zur Durchführung des Verfahrens, wobei die Vorrichtung einen Laser aufweist, der einen Laserstrahl erzeugt und ein optisches Element, mit dem der einen punktförmigen Querschnitt aufweisende Laserstrahl zu einem linienförmigen Querschnitt aufgeweitet wird. Mit einer Transporteinrichtung wird gemäß der Erfindung ein Substrat relativ gegenüber dem aufgeweiteten Laserstrahl transportiert, wobei die Transportrichtung quer zur Erstreckungsrichtung der vom Laserstrahl belichteten Zone erfolgt. Das Substrat wird von einem Wickel abgewickelt werden und auf einem anderen Wickel wieder aufgewickelt werden. Zwischen den beiden Wickeln kann eine Einrichtung angeordnet sein, mit der die Metallschicht auf dem Substrat abgeschieden wird. In Transportrichtung hinter dieser Einrichtung befindet sich die den Laser aufweisende Einrichtung. In Transportrichtung hinter dieser Einrichtung befindet sich eine Einrichtung, mit der Kohlenstoff-Nanoröhrchen auf den Keimzonen abgeschieden werden können. Es sind ferner weitere Einrichtungen vorgesehen, mit denen bspw. ergänzende Prozessschritte durchgeführt werden, um aus der mit Kohlenstoff-Nanoröhrchen beschichteten Folie Elektroden für einen Lithium-Ionen-Akkumulator zu fertigen. Das Substrat kann eine Breite zwischen 100 und 1.000 mm aufweisen. Typischerweise beträgt die Breite 300 bis 600 mm. Das Substrat kann von einer Rolle abgewickelt und auf einer anderen Rolle wieder aufgewickelt werden. Es kann sich bei dem Substrat aber auch um steife Wafer handeln, die einen Durchmesser im Bereich von 50 mm bis 450 mm besitzen. Als Werkstoff für die Substrate kommt insbesondere Silizium, Saphir für Wafer in Betracht. Für aufrollbare Substrate werden bevorzugt flexible metallische Substrate, bspw. Substrate aus Aluminium oder Kupfer, verwendet. Für die Metallbeschichtung wird bevorzugt Aluminium, Nickel, Silber, Gold, Lithium, Titan, Vanadium, Chrom, Eisen, Platin oder Tantal verwendet. Eine typische Schichtdicke liegt zwischen 1nm und 200 nm.

### Kurze Beschreibung der Zeichnungen

Ein Ausführungsbeispiel der Erfindung wird nachfolgend anhand beigefügter Zeichnungen erläutert. Es zeigen:
- Fig. 1: grob schematisch in einer perspektivischen Darstellung das Belichtungsverfahren,
- Fig. 2: vergrößert den Ausschnitt II in Figur 1 betreffend die Anordnung inselförmiger Keimzonen 3,
- Fig. 3: einen Längsschnitt durch das Substrat in Figur 1 an der Stelle, wo ein aufgeweiteter Laserstrahl 5 eine Belichtungszone 15 erzeugt,
- Fig. 4: schematisch eine Vorrichtung zur Durchführung des erfindungsgemäßen Verfahrens.

### Beschreibung der Ausführungsformen

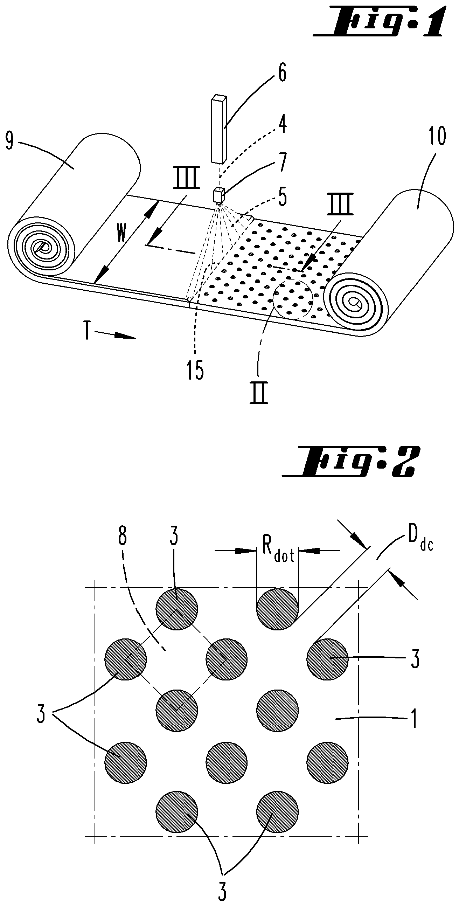

Das erfindungsgemäße Verfahren eignet sich nicht nur zum Behandeln von auf Rollen aufgeführten Substraten, insbesondere solchen Substraten, die mit einer Metallschicht 2 beschichtet sind, sondern auch zum Behandeln nicht beschichteter Substrate 1 und zum Behandeln von Substraten, die als Halbleiterwafer vorliegen. Die Figur 1 zeigt grob schematisch eine Variante des Verfahrens, bei der ein mit einer Metallschicht 2 beschichtetes Substrat 1 auf einem ersten Wickel 9 aufgewickelt ist, von dem es in einer Transportrichtung T abgewickelt wird. Mit einem Laser 6 wird ein im Querschnitt punktförmiger Laserstrahl 4 erzeugt. Mit einer optischen Aufweitvorrichtung 7 wird der punktförmige Laserstrahl 4 zu einem linienförmigen Laserstrahl 5 aufgeweitet. Die Weite des linienförmigen Laserstrahls 5 entspricht im Bereich seines Auftreffens auf die Schicht 2 zumindestens der Weite W des Substrates 1.

Der aufgeweitete Laserstrahl 5 erzeugt auf der Oberfläche des mit einer Schicht 2 beschichteten Substrates eine linienförmige Belichtungszone 15. Zufolge des Transportes des Substrates in Transportrichtung T wandert die linienförmige Belichtungszone 15 quer zu ihrer Erstreckungsrichtung über die Beschichtung 2 des Substrates 1.

Als Folge der Energiebeaufschlagung des gepulst oder kontinuierlich erzeugten Laserstrahls wird an jedem Punkt der Belichtungszone 15 zur gleichen Zeit Energie in Form von Wärme in die Metallschicht 2 eingekoppelt. Dabei bildet sich wegen der gleichzeitigen Belichtung der gesamten linienförmigen Fläche so gut wie kein Temperaturgradient in Richtung der Linienerstreckung aus, sondern nur in Bewegungsrichtung der Belichtungszone 15. Dies hat zur Folge, dass sich das Material der Metallschicht 2 zu inselförmigen Keimzonen 3 organisiert. Die inselförmigen Keimzonen 3 liegen etwa auf den Eckpunkten von Quadraten und besitzen einen Durchmesser von R_{Dot} von 1 bis 100 nm. Die einzelnen inselförmigen Keimzonen 3 sind um die Strecke D_{Dc} von 1 bis 100 nm voneinander beabstandet.

Die Transportgeschwindigkeit beträgt etwa 5 bis 30 cm/s.

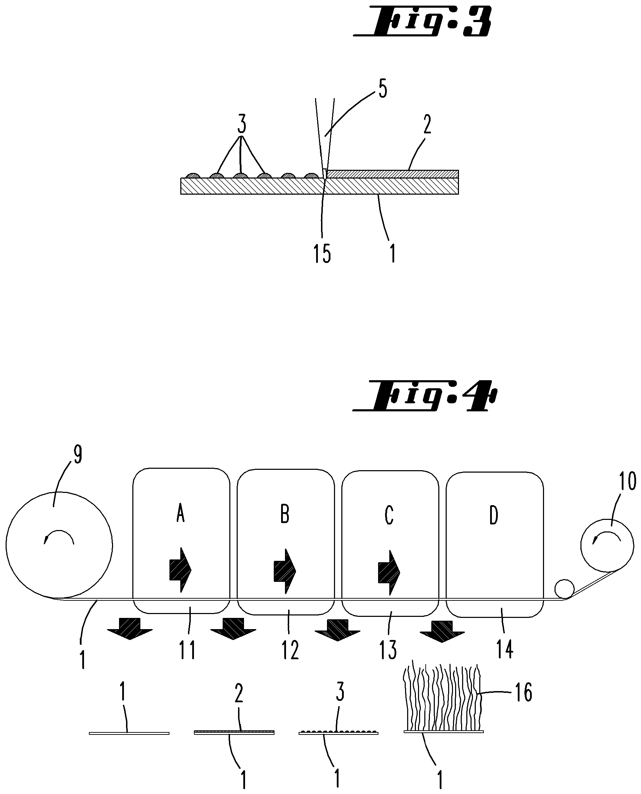

Die Figur 4 zeigt grob schematisch den Aufbau einer Vorrichtung zum Abscheiden von Kohlenstoff-Nanoröhrchen 16 auf einem Substrat 1. Das aus einem Metall, bspw. Kupfer oder Aluminium bestehende Substrat 1 wird von einem ersten Wickel 1 abgewickelt und mit einer Transportgeschwindigkeit durch eine aus mehreren Stufen bestehende Fertigungsvorrichtung hindurch transportiert. Das behandelte Substrat wird auf einem zweiten Wickel 10 wieder aufgewickelt.

Die Vorrichtung besitzt eine erste Station 11, bei der eine Metallschicht 2 auf dem Substrat 1 abgeschieden wird. In einer zweiten Station 12 erfolgt dann mit einer Vorrichtung, die gemäß Figur 1 ausgebildet ist, eine Oberflächenbehandlung der Metallschicht 2 mit einem aufgeweiteten Laserstrahl, so dass sich die voneinander beabstandeten punktförmigen Keimzonen 3 ausbilden. In einer weiteren Station 13 werden dann auf den Keimzonen 3 Kohlenstoff-Nanoröhrchen 16 abgeschieden. In ein oder mehreren weiteren Stationen 15 können dann weitere Behandlungsschritte vorgenommen werden, die üblicherweise erforderlich sind, um Elektroden für einen Lithium-Ionen-Akkumulator zu fertigen.

In den Figuren sind die inselförmigen Keimzonen 3 stark vergrößert dargestellt, um ihre gleichmäßige Anordnung auf dem Substrat 1 zu verdeutlichen. In der Realität sind die Inseln 3 im Submikronbereich voneinander beabstandet. Die Fläche der inselförmigen Keimzonen 3 und der Abstand der inselförmigen Keimzonen 3 lassen sich durch die oben angegebenen Parameter, wie Laserleistung und Schichtdicke, reproduzierbar einstellen.

Bei dem erfindungsgemäßen Verfahren wird zunächst auf ein unstrukturiertes Substrat eine geschlossene Metallschicht abgeschieden. Die Metallschicht bedeckt die Substratoberfläche bevorzugt vollständig, so dass die Breite der Metallschicht mit der Breite des Substrates übereinstimmt. Ein aufgeweiteter Laserstrahl, dessen Breite der Breite der Metallschicht entspricht, wird verwendet, um die Metallschicht gleichzeitig über ihre gesamte Breite energiezubeaufschlagen. Quer zur Richtung des linienförmig aufgeweiteten Laserstrahls wird das Substrat relativ gegenüber der linienförmigen Laserbehandlungszone transportiert, so dass die Laser-Behandlungszone über das Substrat wandert.

Obwohl weder auf der Metallbeschichtung noch unter der Metallbeschichtung eine Strukturierung vorgenommen worden ist, bildet sich im Bereich der Laserbehandlungszone eine Vielzahl von im Wesentlichen gleich beabstandeten metallische Inseln aus. Die Metallschicht zieht sich lokal auf inselförmige Bereiche zurück. Die dadurch gebildeten inselförmigen Keimzonen liegen typischerweise auf den Eckpunkten rechteckiger Einheitszellen.

Die Erfindung betrifft somit bevorzugt ein Verfahren zum Erzeugen einer strukturierten Keimschicht zum darauf Abscheiden von Kohlenstoff-Nanoröhrchen 16, wobei auf eine unstrukturierte Oberfläche eines Substrates 1 zunächst eine geschlossene homogene Metallschicht 2 aufgebracht wird und daran anschließend mit einem Laserstrahl 4 die Metallschicht 2 energiebeaufschlagt wird, wobei der Laserstrahl 4 zu einem im Querschnitt linienförmigen Strahl 5 aufgeweitet wird, mit dem gleichzeitig eine linienförmige Belichtungszone 15 der Metallschicht 2 belichtet wird, wobei die Belichtungszone 15 mit einer derartigen Wanderungsgeschwindigkeit in einer Richtung quer zu ihrer Erstreckungsrichtung über die Metallschicht 2 wandert und der Laserstrahl 4 in der Belichtungszone 15 mit einer derartigen Energiedichte die Metallschicht energiebeaufschlagt, dass sich die Metallschicht 2 zu vereinzelten, im Wesentlichen gleich großen Inseln 3 umformt, die im Wesentlichen voneinander gleich beabstandet sind, wobei die kreisäquivalenten Durchmesser der Inseln 3 kleiner 2µm sind und die metallschichtfreie Strecke zwischen zwei benachbarten Inseln 3 kleiner als 2µm ist.

Die in der Wanderungsrichtung gemessene Erstreckung des Laserstrahls 5, also dessen Länge, die der Breite der Belichtungszone 15 entspricht, liegt bevorzugt in einem Bereich zwischen 0,5 mm und 1,5 mm. Bei einem gepulsten Laserstrahl ist die Pulsfolge derartig hoch, dass die Belichtungszone 15 quasi kontinuierlich lichtbeaufschlagt wird. Die Pulsfrequenz ist insbesondere wesentlich größer (Faktor 10) als der Quotient von Wanderungsgeschwindigkeit und Breite der Belichtungszone 15. Während sich über die Länge der Belichtungszone 15, also in Linienrichtung des aufgeweiteten Laserstrahls kein Temperaturgradient in der durch die Laserbeaufschlagung aufgeschmolzenen Metallschicht 2 einstellt, bildet sich in Wanderungsrichtung des Laserstrahls ein hoher Temperaturgradient aus.

### Liste der Bezugszeichen

| | | | |
|---|---|---|---|
| 1 | Substrat | | |
| 2 | Metallschicht | | |
| 3 | Inseln | | |
| 4 | Laserstrahl | | |
| 5 | aufgeweiteter Laserstrahl | | |
| 6 | Laser | T | Transportrichtung |
| 7 | Optik | W | Weite |
| 8 | Elementarzelle | | |
| 9 | Wickel | | |
| 10 | Wickel | | |
| 11 | erste Station | | |
| 12 | zweite Station | | |
| 13 | weitere Station | | |
| 14 | | | |
| 15 | Belichtungszone | | |
| 16 | Kohlenstoff-Nanoröhrchen | | |

## Patentansprüche

1. Verfahren zum Erzeugen einer strukturierten Keimschicht zum darauf Abscheiden von Kohlenstoff-Nanoröhrchen (16), wobei eine zuvor auf ein Substrat (1) aufgebrachte Metallschicht (2) mit einem Laserstrahl (4) derart energiebeaufschlagt wird, dass sich die Metallschicht (2) umformt, **dadurch gekennzeichnet, dass** durch Aufweiten des Laserstrahls (4) zu einem im Querschnitt linienförmigen Strahl (5) und gleichzeitigem Belichten einer in einer Richtung quer zu ihrer Erstreckungsrichtung über die Metallschicht (2) wandernden linienförmigen Belichtungszone (15) der Metallschicht (2), einzelne Inseln (3) erzeugt werden..

2. Verfahren nach Anspruch 1, **dadurch gekennzeichnet, dass** die Weite (W) des Laserstrahls einer Breite des Substrates (1) entspricht und in einem Bereich zwischen 20 mm und 1.000 mm oder zwischen 100 mm und 1.000 mm liegt.

3. Verfahren nach Anspruch 2, **dadurch gekennzeichnet, dass** die Weite (W) des aufgeweiteten Laserstrahls (5) im Bereich zwischen 300 und 600 mm liegt.

4. Verfahren nach einem der vorhergehenden Ansprüche, **dadurch gekennzeichnet, dass** das Substrat (1) aus Silizium, Saphir, Aluminium, Kupfer oder einem anderen Metall besteht.

5. Verfahren nach einem der vorhergehenden Ansprüche, **dadurch gekennzeichnet, dass** die Metallschicht (2) aus Aluminium, Nickel, Silber, Gold, Lithium, Titan, Vanadium, Chrom, Eisen, Platin, Tantal oder einem anderen edlen oder nichtedlen Metall besteht.

6. Verfahren nach einem der vorhergehenden Ansprüche, **dadurch gekennzeichnet, dass** die Dicke der Metallschicht im Bereich zwischen 1 und 200 nm liegt.

7. Verfahren nach einem der vorhergehenden Ansprüche, **dadurch gekennzeichnet, dass** die sich quer zur Weite (W) des aufgeweiteten Laserstrahls (5) erstreckende Länge des Laserstrahls, die der Breite der Belichtungszone (15) entspricht, 0,5 bis 5 mm beträgt.

8. Verfahren nach einem der vorhergehenden Ansprüche, **dadurch gekennzeichnet, dass** die Wellenlänge des vom Laser (6) erzeugten Lichts im Bereich zwischen 200 nm und 1,5µm liegt.

9. Verfahren nach einem der vorhergehenden Ansprüche, **dadurch gekennzeichnet, dass** der Laser (6) gepulstes oder kontinuierliches Licht abgibt, wobei die Pulsenergie im Bereich zwischen 0,5 und 20 mJ liegt.

10. Verfahren nach einem der vorhergehenden Ansprüche, **dadurch gekennzeichnet, dass** die Geschwindigkeit, mit der der aufgeweitete Laserstrahl (5) über die Metallschicht (2) wandert, im Bereich zwischen 1 und 50 cm/s, bevorzugt zwischen 5 und 30 cm/s liegt.

11. Verfahren nach einem der vorhergehenden Ansprüche, **dadurch gekennzeichnet, dass** die inselförmigen Keimzonen (3) äquivalente Kreisdurchmesser von 1 nm bis 2 µm, bevorzugt 1 nm bis 500 nm, besonders bevorzugt 1 nm bis 100 nm besitzen und/ oder, dass die Abstände der Mittelpunkte benachbarter inselförmiger Keimzonen (3) im Bereich zwischen 1 nm und 2 µm, bevorzugt zwischen 1 nm und 500 nm, besonders bevorzugt zwischen 1 und 100 nm liegen.

12. Verfahren nach einem der vorhergehenden Ansprüche, **gekennzeichnet durch** eine rechteckige, insbesondere quadratische oder nahezu quadratische Anordnung der inselförmigen Keimzonen (3).

13. Vorrichtung zur Durchführung des Verfahrens gemäß einem der vorhergehenden Ansprüche, mit einem Laser (6) zum Erzeugung eines Laserstrahles **gekennzeichnet durch** folgende Merkmale:
eine Einrichtung (9,10) zum Transport eines Substrates (1) mit einer darauf aufgebrachten Metallschicht (2), eine Einrichtung (7) zur Aufweitung des Laserstrahls zur Erzeugung einer linienförmigen Belichtungszone (15), wobei die Einrichtung (7) derart angeordnet ist, dass sich die linienförmige Belichtungszone (15) senkrecht zur Transportrichtung des Substrates (1) erstreckt, eine Einrichtung zum Abrollen eines auf einem Wickel (9) aufgewickelten Substrates, eine Einrichtung (13) zum Abscheiden von Kohlenstoff-Nano-Röhrchen (16) auf den inselförmigen Keimzonen (3) und eine Einrichtung zur Halterung eines Wickels (10), auf dem das bearbeitete Substrat aufgewickelt wird.

14. Vorrichtung nach Anspruch 13, **gekennzeichnet durch** eine Einrichtung (11) zum Beschichten des Substrates (1) mit einer Metallschicht (2), die in einer Transportrichtung des Substrates (1) vor der Einrichtung (7) zur Aufweitung des Laserstrahls angeordnet ist.

## Claims

1. Method for producing a structured seed layer for depositing carbon nanotubes (16) thereon, a metal layer (2) previously applied to a substrate (1) being energised by means of a laser beam (4) in such a way that the metal layer (2) deforms, **characterised in that** individual islands (3) are produced by expanding the laser beam (4) to form a beam (5) which has a linear cross section and simultaneously exposing a linear exposure zone (15) of the metal layer (2) that travels over the metal layer (2) in a direction transverse to the extension direction of said exposure zone.

2. Method according to claim 1, **characterised in that** the width (W) of the laser beam corresponds to a width of the substrate (1) and is in a range between 20 mm and 1,000 mm or between 100 mm and 1,000 mm.

3. Method according to claim 2, **characterised in that** the width (W) of the expanded laser beam (5) is in the range between 300 and 600 mm.

4. Method according to any of the preceding claims, **characterised in that** the substrate (1) consists of silicon, sapphire, aluminium, copper or another metal.

5. Method according to any of the preceding claims, **characterised in that** the metal layer (2) consists of aluminium, nickel, silver, gold, lithium, titanium, vanadium, chromium, iron, platinum, tantalum or another noble or non-noble metal.

6. Method according to any of the preceding claims, **characterised in that** the thickness of the metal layer is in the range between 1 and 200 nm.

7. Method according to any of the preceding claims, **characterised in that** the length of the laser beam, which extends transversely to the width (W) of the expanded laser beam (5) and corresponds to the width of the exposure zone (15), is 0.5 to 5 mm.

8. Method according to any of the preceding claims, **characterised in that** the wavelength of the light generated by the laser (6) is in the range between 200 nm and 1.5 µm

9. Method according to any of the preceding claims, **characterised in that** the laser (6) emits pulsed or continuous light, the pulse energy being in the range between 0.5 and 20 mJ.

10. Method according to any of the preceding claims, **characterised in that** the speed at which the expanded laser beam (5) travels over the metal layer (2) is in the range between 1 and 50 cm/s, preferably between 5 and 30 cm/s.

11. Method according to any of the preceding claims, **characterised in that** the island-shaped seed zones (3) have equivalent circular diameters of 1 nm to 2 µm , preferably 1 nm to 500 nm, particularly preferably 1 nm to 100 nm, and/or **in that** the distances between the centre points of adjacent island-shaped seed zones (3) are in the range between 1 nm and 2 µm, preferably between 1 nm and 500 nm, particularly preferably between 1 and 100 nm.

12. Method according to any of the preceding claims, **characterised by** a rectangular, in particular square or almost square arrangement of the island-shaped seed zones (3).

13. Apparatus for carrying out the method according to any of the preceding claims, comprising a laser (6) for generating a laser beam, **characterised by** the following features:
a device (9, 10) for transporting a substrate (1) having a metal layer (2) applied thereon, a device (7) for expanding the laser beam in order to generate a linear exposure zone (15), the device (7) being arranged in such a way that the linear exposure zone (15) extends perpendicularly to the transport direction of the substrate (1), a device for unrolling a substrate wound on a roll (9), a device (13) for depositing carbon nanotubes (16) on the island-shaped seed zones (3), and a device for holding a roll (10) on which the processed substrate is wound.

14. Apparatus according to claim 13, **characterised by** a device (11) for coating the substrate (1) with a metal layer (2), which device is arranged in front of the device (7) for expanding the laser beam in a transport direction of the substrate (1).

## Revendications

1. Procédé de fabrication d'une couche de germination structurée pour le dépôt sur celle-ci de nanotubes de carbone (16), dans lequel une couche métallique (2) appliquée auparavant sur un substrat (1) est soumise à de l'énergie avec un faisceau laser (4) de manière que la couche métallique (2) se modifie, **caractérisé en ce que** des îlots individuels (3) sont produits en élargissant le faisceau laser (4) en un faisceau linéaire (5) en section transversale et en irradiant simultanément une zone d'irradiation linéaire (15) de la couche métallique (2), qui se déplace dans une direction transversale à sa direction d'extension sur la couche métallique (2).

2. Procédé selon la revendication 1, **caractérisé en ce que** la largeur (W) du faisceau laser correspond à une largeur du substrat (1) et se situe dans une plage comprise entre 20 mm et 1000 mm ou entre 100 mm et 1000 mm.

3. Procédé selon la revendication 2, **caractérisé en ce que** la largeur (W) du faisceau laser élargi (5) est comprise entre 300 et 600 mm.

4. Procédé selon l'une des revendications précédentes, **caractérisé en ce que** le substrat (1) est constitué de silicium, de saphir, d'aluminium, de cuivre ou d'un autre métal.

5. Procédé selon l'une des revendications précédentes, **caractérisé en ce que** la couche métallique (2) est constituée d'aluminium, de nickel, d'argent, d'or, de lithium, de titane, de vanadium, de chrome, de fer, de platine, de tantale ou d'un autre métal précieux ou non précieux.

6. Procédé selon l'une des revendications précédentes, **caractérisé en ce que** l'épaisseur de la couche métallique est comprise entre 1 et 200 nm.

7. Procédé selon l'une des revendications précédentes, **caractérisé en ce que** la longueur du faisceau laser s'étendant transversalement à la largeur (W) du faisceau laser élargi (5) et correspondant à la largeur de la zone d'irradiation (15) est de 0,5 à 5 mm.

8. Procédé selon l'une des revendications précédentes, **caractérisé en ce que** la longueur d'onde de la lumière générée par le laser (6) est comprise entre 200 nm et 1,5 µm.

9. Procédé selon l'une des revendications précédentes, **caractérisé en ce que** le laser (6) émet une lumière pulsée ou continue, l'énergie des impulsions étant comprise entre 0,5 et 20 mJ.

10. Procédé selon l'une des revendications précédentes, **caractérisé en ce que** la vitesse à laquelle le faisceau laser élargi (5) se déplace sur la couche métallique (2) est comprise entre 1 et 50 cm/s, de préférence entre 5 et 30 cm/s.

11. Procédé selon l'une des revendications précédentes, **caractérisé en ce que** les zones de germination en forme d'îlots (3) ont des diamètres circulaires équivalents de 1 nm à 2 µm, de préférence de 1 nm à 500 nm, de manière particulièrement préférée de 1 nm à 100 nm, et/ou **en ce que** les distances entre les centres des zones de germination en forme d'îlots (3) adjacentes sont dans la plage entre 1 nm et 2 µm, de préférence entre 1 nm et 500 nm, de manière particulièrement préférée entre 1 et 100 nm.

12. Procédé selon l'une des revendications précédentes, **caractérisé par** un agencement rectangulaire, en particulier carré ou presque carré, des zones de germination (3) en forme d'îlots.

13. Dispositif pour la mise en œuvre du procédé selon l'une des revendications précédentes, comprenant un laser (6) pour générer un faisceau laser, **caractérisé par** les caractéristiques suivantes :
un dispositif (9, 10) pour le transport d'un substrat (1) sur lequel est appliqué une couche métallique (2), un dispositif (7) pour l'élargissement du faisceau laser pour produire une zone d'irradiation linéaire (15), le dispositif (7) étant disposé de manière que la zone d'irradiation linéaire (15) s'étende perpendiculairement à la direction de transport du substrat (1), un dispositif pour dérouler un substrat enroulé sur une bobine (9), un dispositif (13) pour déposer des nanotubes de carbone (16) sur les zones de germination en forme d'îlots (3) et un dispositif pour supporter une bobine (10) sur laquelle le substrat traité est enroulé.

14. Dispositif selon la revendication 13, **caractérisé par** un dispositif (11) pour revêtir le substrat (1) d'une couche métallique (2), qui est agencé dans une direction de transport du substrat (1) en amont du dispositif (7) pour élargir le faisceau laser.
